## Europäisches Patentamt
## European Patent Office
## Office européen des brevets

(19)

(11) Numéro de publication: **0 028 571**
**B1**

(12)

# FASCICULE DE BREVET EUROPEEN

(45) Date de publication du fascicule du brevet: **04.01.84**

(51) Int. Cl.³: **G 21 C 7/18, G 21 C 7/14**

(21) Numéro de dépôt: **80401553.5**

(22) Date de dépôt: **31.10.80**

(54) **Mécanisme à chaînes à mouvement différentiel pour la commande d'un réacteur nucléaire.**

(30) Priorité: **31.10.79 FR 7926996**

(43) Date de publication de la demande:
**13.05.81 Bulletin 81/19**

(45) Mention de la délivrance du brevet:
**04.01.84 Bulletin 84/1**

(84) Etats contractants désignés:
**BE DE GB IT NL**

(56) Documents cités:
**GB - A - 1 001 652**
**US - A - 3 941 413**

(73) Titulaire: **Framatome**
**Tour Fiat 1 place de la Coupole**
**F-92400 Courbevoie (FR)**

(72) Inventeur: **Martin, Jean**
**5, rue Corot**
**F-92320 Chatillon (FR)**
Inventeur: **Lafosse, Claude**
**92, avenue Edouard Herriot**
**F-92350 Le Plessis Robinson (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

# Mécanisme à chaines à mouvement différentiel pour la commande d'un réacteur nucléaire

L'invention concerne un mécanisme à chaines à mouvement différentiel pour la commande d'un réacteur nucléaire, par déplacement vertical d'un ensemble absorbant les neutrons dans le coeur du réacteur et retombée de cet ensemble sous l'effet de son poids en position d'insertion maximum.

Pour la commande des réacteurs nucléaires, pour obtenir une puissance variable en fonctionnement, on déplace, généralement dans la direction verticale, des ensembles absorbant les neutrons à l'intérieur du coeur du réacteur où se trouvent les éléments combustibles.

Les éléments absorbants les neutrons étant généralement introduits par le haut du coeur, on augmente leur insertion par un déplacement vers le bas et l'on diminue cette insertion par un mouvement vers le haut. Dans le premier cas, on obtient une diminution de la puissance du réacteur et dans l'autre cas on obtient une augmentation de cette puissance.

En cas d'arrêt d'urgence du réacteur nécessité par un incident de fonctionnement, il est nécessaire de placer très rapidement les éléments absorbants en position d'insertion maximum dans le coeur du réacteur afin de stopper la réaction nucléaire.

Pour ce faire, on laisse généralement retomber les éléments absorbants sous l'effet de leur propre poids en position d'insertion maximum dans le coeur du réacteur.

Dans le cas des réacteurs nucléaires à eau pressurisée par exemple, les ensembles absorbant les neutrons sont constitués par des tubes de grande longueur renfermant un matériau absorbant fortement les neutrons. Ces tubes de grande longueur sont groupés par ensembles appelés grappes de commande, chacune de ces grappes ou barres de commande étant associée à un assemblage combustible. Pour la commande de réacteur, les barres de commande sont déplacées verticalement, ce qui produit un déplacement des tubes renfermant le matériau absorbant entre les crayons combustibles qui sont en position verticale dans le coeur et qui sont groupés pour constituer les assemblages combustibles.

On a déjà proposé divers dispositifs mécaniques ou électro-mécaniques pour réaliser des déplacements contrôlés des barres de commande dans la direction verticale et pour obtenir une retombée immédiate de ces barres de commande ou moment de l'arrêt d'urgence.

Ces mécanismes sont cependant complexes et encombrants, ce qui est gênant car l'ensemble du mécanisme doit être logé dans un carter étanche en communication avec l'intérieur de la cuve du réacteur et disposé à la partie supérieure de cette cuve.

On a ainsi proposé des dispositifs à cliquets et des dispositifs à pignons et crémaillères qui nécessitent un usinage spécial d'une tige prolongeant vers le haut l'élément absorbant appelée pièce de liaison, pour réaliser sur cette tige une suite d'encoches également espacées ou une crémaillère.

On connaît un dispositif de commande d'une pince de manutention décrit dans le brevet GB—A—1.001.652 qui comporte un dispositif différentiel à pignons coniques et un ensemble de chaines et de poulies à chaines pour la manoeuvre de la pince. Le différential comporte un porte-satellite dans lequel sont montés deux pignons satellites engrénant avec deux pignons planétaires tournant librement sur un arbre commun horizontal sur lequel est calé le porte-satellite. De cette façon, la mise en rotation de l'arbre du différentiel et du porte-satellite entraine la mise en rotation des deux pignons planétaires dans le même sens. Ces pignons planétaires sont solidaires chacun d'une poulie à chaine sur laquelle passe un brin vertical d'une chaine supportant une autre poulie à chaine d'axe perpendiculaire à l'arbre du différentiel portant la pince par l'intermédiaire de son axe. La mise en rotation de l'arbre du différentiel dans un sens ou dans l'autre entraine un déplacement vertical sans rotation, de la poulie à chaine portant la pince, vers le haut ou vers le bas.

Une manivelle permet de faire tourner l'une des poulies à chaines solidaire d'un pignon satellite entre deux positions angulaires. Ce mouvement de la poulie à chaine entraine, par l'intermédiaire du différentiel, la mise en rotation de la poulie à chaine solidaire de l'autre satellite, en sens inverse. Ces rotations en sens inverse des poulies à chaines solidaires des satellites entraine la mise en rotation de la poulie à chaines portant la pince, ce qui actionne un dispositif de verrouillage et de déverrouillage de la pince.

Une pince de manutention comportant un tel dispositif de commande ne pourrait cependant pas être utilisée pour le déplacement précis d'une barre de commande d'un réacteur nucléaire et pour la liberation pour la retombée en chute libre de celle-ci car son encombrement est trop important pour qu'on puisse la loger dans un carter étanche.

De plus, le mouvement d'ouverture des doigts de la pince est obtenu par mouvement vertical du grappin, après déverrouillage de la pince. Ce moyen n'est pas assez sûr et rapide pour réaliser la retombée des barres en cas d'arrêt d'urgence.

Le but de l'invention est donc de proposer un mécanisme à chaines à mouvement différentiel pour la commande d'un réacteur nucléaire, par déplacement vertical d'un ensemble absorbant les neutrons dans le coeur du réacteur et retombée de cet ensemble sous l'effet de son poids en position d'insertion maximum, au moment de l'arrêt d'urgence, l'élément absorbant comportant à sa partie supérieure une pièce de liaison permettant de relier l'ensemble absorbant au mécanisme pour son déplacement contrôlé lorsque les doigts pivotants d'un grappin porté par les chaines sont en position de fermeture sur la tige de commande ou sa retombée, lorsque les doigts sont mis en position d'ouverture, le déplacement vertical du grappin et de l'élément absorbant étant obtenu grâce au mouvement synchrone de deux brins de levage fixés au grappin et les mouvements d'ouverture et de fermeture des doigts du grappin par un mouvement différentiel des brins de levage, le mécanisme comportant à l'intérieur d'une enceinte étanche en communication avec l'intérieur du réacteur nucléaire:

— au moins une poulie à chaines, appelée poulie porteuse, fixée sur un axe horizontal monté rotatif sur le corps du grappin
— au moins une chaine supportant la poulie porteuse
— et un dispositif différentiel à pignons,

et devant permettre des mouvements des barres de commande extrêmement précis et très bien contrôlés et une très grande sûreté de fonctionnement en ce que concerne l'ouverture des doigts, tout en étant d'une grande simplicité de construction et d'un faible encombrement.

Dans ce but:

— l'axe de la poulie porteuse est relié à un dispositif d'actionnement des doigts pivotants, la rotation de l'axe dans un sens ou dans l'autre provoquant l'ouverture ou la fermeture des doigts, par l'intermédiaire du dispositif d'actionnement,
— chacune des chaines a un parcours vertical d'un côté au moins de la poulie porteuse, avec renvoi sur une poulie à chaines motrice d'axe parallèle à l'axe de la poulie porteuse à la partie supérieure de sa course, la ou les chaines constituant au moins deux brins de levage disposés de part et d'autre de la poulie porteuse, passant chacun sur une poulie motrice,
— et le dispositif différentiel comprend un pignon d'attaque entrainé par un dispositif moteur, un ensemble de pignons montés rotatifs dans un support fixe solidaire de l'enceinte étanche de façon à transmettre la rotation du pignon d'attaque et un support mobile monté pivotant par rapport à l'enceinte étanche dans lequel est monté rotatif au moins un pignon engrénant avec l'un au moins des pignons de la partie fixe du différentiel, le support mobile étant relié à un organe de déplacement pour son maintien en position ou pour son déplacement dans un sens ou dans l'autre, cependant que deux pignons au moins du différentiel entrainés en rotation à la même vitesse et dans des sens différents, lorsque le dispositif moteur est mis en fonctionnement, le support mobile étant maintenu en position, sont solidaires chacun d'une poulie motrice pour le déplacement vertical de l'ensemble absorbant, le déplacement du support mobile entrainant une rotation différentielle des deux pignons solidaires des poulies motrices pour provoquer par l'intermédiaire des chaines, la rotation de l'axe et l'ouverture ou la fermeture des doigts pivotants.

On va maintenant décrire, à titre d'exemple non limitatif, en se référant aux figures jointes en annexe, deux modes de réalisation du mécanisme à chaines suivant l'invention utilisé pour la commande d'un réacteur nucléaire à eau pressurisée.

La figure 1 est une vue en coupe par un plan vertical de symétrie d'un premier mode de réalisation du dispositif suivant l'invention.

La figure 2 est une vue en élévation du dispositif avec coupe partielle par un plan perpendiculaire au plan de coupe de la figure 1.

La figure 3 est une vue suivant A A de la figure 1.

La figure 4 est une coupe suivant B B de la figure 3.

La figure 5 est une vue en coupe par un plan vertical de symétrie d'un second mode de réalisation du dispositif suivant l'invention.

La figure 6 est une vue en coupe par un plan perpendiculaire au plan de coupe de la figure 5 d'une partie du dispositif représenté à la figure 5.

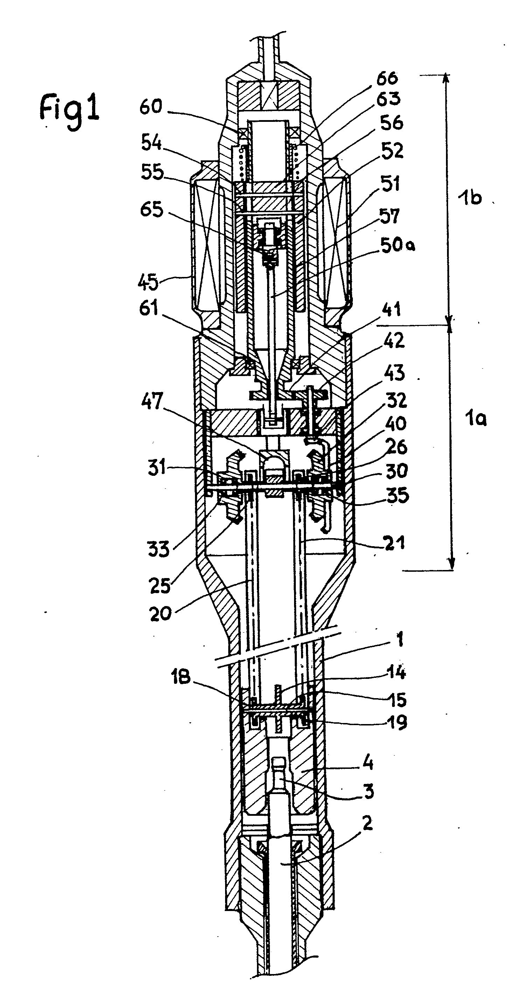

Sur la figure 1, on voit l'enceinte 1 en communication avec l'intérieur de la cuve du réacteur et montée étanche sur cette cuve dans laquelle pénètre une pièce de liaison 2 reliée à sa partie inférieure non représentée à la barre de commande dont le mécanisme de déplacement est représenté à la figure 1.

La pièce de liaison 2 comporte à sa partie supérieure une gorge 3 disposée au niveau du grappin 4 constituant une partie du mécanisme de déplacement des barres de commande suivant l'invention.

Ainsi qu'il est visible sur les figures 1, 2, 3 et 4, le grappin comporte deux doigts de préhension de la tige de commande 6 et 7 réalisées sous la forme de deux doigts pivotants articulés en 8 et 9 sur le corps du grappin.

La partie supérieure de ces doigts pivotants 6 et 7 comporte des galets 10 et 11 qui sont engagés dans les lumières 12 et 13 constituant les parties actives d'une came 14 circulaire calée sur un arbre 15 monté rotatif à la partie supérieure du grappin 4.

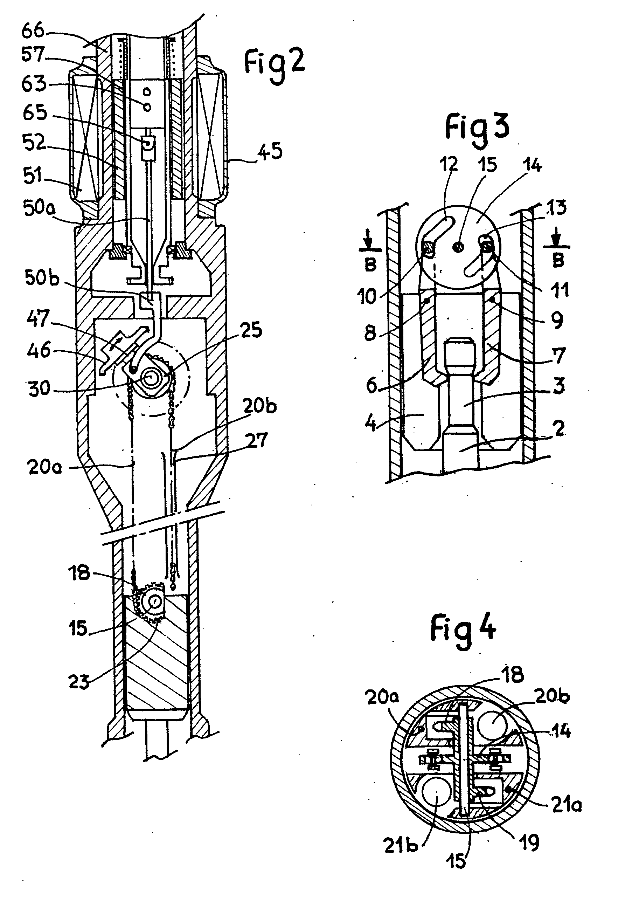

De part et d'autre de la came 14 sont également montées et fixées rigidement sur l'axe 15, deux portions de poulies à chaines 18 et 19 comportant une denture permettant l'engrènement de deux chaines 20 et 21 fixées en un point (tel que 23 pour la chaine 20 visible sur la figure 2) sur les portions de poulies 18 et 19 respectivement.

La chaine 20 (et la chaine 21 dont le parcours est identique) visible à la figure 2 a un parcours vertical entre la poulie 18 et une poulie de renvoi motrice 25 comportant également des dents qui engrènent avec la chaine.

Après son passage sur la poulie 25, la chaine 20 passe dans un guide 27 constituant la réserve de chaines pour les déplacements verticaux du grappin 4 suspendu au brin 20a de la chaine 20 appelé brin porteur et au brin 21a correspondant de la chaine 21. Le brin mou 20b passant dans le guide 27 a une longueur déterminée par l'amplitude de déplacement maximum de la barre de commande suspendue à la pièce de liaison 2 et par son intermédiaire au grappin 4.

La chaine 21 est montée de la même façon que le chaine 20 et passe sur une poulie supérieure motrice 26 de sorte qu'on peut définir un brin porteur 21a et un brin mou 21b sur la chaine 21.

Les deux portions de poulies à chaines 18 et 19 sont montées de part et d'autre de l'axe 15 comme il est visible sur la figure 4, si bien que les chaines 20 et 21 sont montées en opposition sur les poulies porteuses 18 et 19 à la partie superieure du grappin.

De la même façon, les chaines 20 et 21 passent en sens inverse sur les poulies de renvoi motrices 25 et 26 à la partie supérieure de leur course.

La partie supérieure de plus grand diamètre 1a de l'enceinte sous presion 1 renferme l'ensemble permettant l'entrainement en rotation des poulies 25 et 26.

La partie 1a de l'enceinte sous pression renferme un différentiel monté sur un axe 30 transversal et solidaire de l'enceinte 1.

Le différentiel comporte deux pignons coniques planétaires 31 et 32 solidaires respectivement des poulies motrices à chaines 25 et 26, l'ensemble constitué par le pignon 31 et la poulie 25 étant monté rotatif sur l'axe 30 par l'intermédiaire d'un dispositif à roulement 33 et l'ensemble constitué par le pignon 32 et la poulie 26 étant monté rotatif sur l'axe 30 par l'intermédiaire d'un jeu de roulements 35.

Le pignon d'attaque 40 du différentiel est monté rigidement solidaire du pignon planétaire 32 et lui-même entrainé en rotation par un ensemble de pignons 41, 42, 43 constituant une chaine cinématique transmettant la rotation d'un moteur 45 qui sera décrit plus en détail ci-dessous, au pignon d'attaque 40 du différentiel.

Le différentiel comporte également un pignon satellite conique 46 monté rotatif dans un porte satellite 47 et assurant la transmission de la rotation du planétaire 32 au planétaire 31.

De cette façon, lorsque le planétaire 32 est mis en rotation en même temps que le pignon d'attaque 40 qui lui est solidaire, le planétaire 31 est mis en rotation dans le sens inverse. ·En effet le porte satellite 47 qui est monté rotatif sur l'axe 30 peut être maintenu immobile grâce â un organe de maintien 50 qui sera décrit ci-dessous.

Le porte satellite 47 étant immobile, la rotation du pignon d'attaque 40 entraine des rotations dans le sens inverse des deux planétaires et des deux poulies à chaines 25 et 26 qui leur sont associées.

Etant donné le sens d'enroulement des chaines 20 et 21 sur les poulies motrices 25 et 26, la rotation en sens inverse de ces deux poulies provoque soit un mouvement vers le haut soit un mouvement vers le bas du grappin 4, les poulies porteuses 18 et 19 sollicitées en sens inverse par les chaines 20 et 21 respectivement et calées sur l'axe 15 restant immobiles.

Pour effectuer la mise en rotation des pignons du différentiel dans un sens du dans l'autre à partir du pignon d'attaque 40 et de la chaine cinématique 41, 42, 43, on utilise un dispositif moteur placé à l'intérieur de la partie supérieure extrême 1b de l'enceinte sous pression.

Ce dispositif moteur est constitué par un moteur électrique pas à pas comportant un stator 51 disposé à l'extérieur de l'enceinte étanche et entourant la partie 1b de cette enceinte et un rotor 52 disposé à l'intérieur de l'enceinte étanche au niveau de sa partie 1b.

Le rotor 52 comporte deux perçages dans la direction radiale à l'intérieur desquels sont disposées des goupilles 54 et 55.

Ces goupilles 54 et 55 permettent d'une part d'arrêter la chute du rotor 52 lorsque le stator 51 n'est pas alimenté, la goupille 55 venant alors reposer à la base d'une lumière 56 ménagée dans une chemise 57 montée rotative par l'intermédiaire de roulements 60 et 61 à l'intérieur de l'enceinte 1b. La clavette 54 permet de limiter le mouvement du rotor 52 vers le haut lorsque le stator 51 est alimenté et que le rotor vient se placer dans la position où le flux est maximum. La clavette 54 sert alors de butée haute au rotor en venant en appui sur la partie supérieure de la lumière 56 de la chemise 57.

Lorsque le stator est alimenté, la mise en rotation du rotor 52 entraine la rotation de la chemise 57 montée rotative dans l'enceinte et portant l'engrenage 41 qui constitue l'origine de la chaine cinématique entrainant le différentiel, la transmission de la rotation du rotor 52 à la chemise 57 se faisant par l'intermédiaire des goupilles 54 et 55.

Les goupilles 54 et 55 permettent également de relier au rotor 52 le support 63 de l'organe de maintien et de déplacement 50 du porte satellite 47.

En effet le support 63 porte par l'intermédiaire d'une liaison à cardan 65 la tige de commande 50a constituant avec la chape d'actionnement 50b articulée sur le porte satellite 47, le dispositif de maintien et de déplacement du porte satellite.

Un ressort 66 disposé entre la partie supérieure du rotor 52 et l'enceinte fixe 1 permet de rappeler le rotor 52 en position basse lors qu'on coupe l'alimentation du stator 51.

Lorsqu'on alimente le stator 51 du moteur, le rotor vient en position haute telle que représentée à la figure 1 en entraînant vers le haut le support 63 et l'organe 50 provoquant ainsi une rotation du porte satellite 47 autour de l'axe 30, ce qui provoque une mise en rotation du planétaire 31 du différentiel dans le même sens et donc une mise en rotation de la poulie à chaîne 25 et des poulies porteuses 18 et 19 dans le même sens. Au cours de cette rotation le grappin est déplacé très légèrement vers le bas et l'axe 15 est mis en rotation, ce qui a pour effet d'entraîner en rotation la came 14 calée sur cet arbre.

Les parties actives 12 et 13 de cette came sont conçues de façon qu'en fin de mouvement vers le haut du stator et du dispositif 50, les doigts pivotants soient placés et maintenus dans leur position de fermeture telle que représentée à la figure 3.

La pièce de liaison 2 est alors entraînée par le grappin 4 dans ses mouvements de déplacement provoqués par la mise en rotation du moteur pas à pas.

Tant que l'alimentation du moteur est maintenue soit que ce moteur effectue des pas dans un sens ou dans l'autre entraînant un mouvement de montée ou de descente du grappin de la pièce de liaison et de la barre de commande, soit que le moteur soit calé dans une position angulaire donnée et qu'alors la barre de commande est maintenue dans une position verticale définie, le dispositif 50 maintient le porte satellite en position fixe, ce qui permet d'une part d'assurer la mise en rotation des poulies motrices solidaires des planétaires du différentiel dans des sens différents et d'autre part de maintenir fixe en rotation l'axe 15 de la came 14 qui reste dans une position telle qu'elle verrouille les griffes 6 et 7 en position de fermeture.

On peut alors effectuer grâce au moteur pas à pas des déplacements dans un sens et dans l'autre d'une amplitude quelconque, du grappin entraînant la pièce de liaison la barre de commande ou maintenir en position fixe dans la direction verticale le grappin, la pièce de liaison et la bare de commande en maintenant l'alimentation du stator 51 afin de maintenir le rotor 52 en position haute.

Si l'on interrompt l'alimentation du stator 51, le rotor 52 retombe sous l'effet de son propre poids et sous l'effet de la force du ressort 66 en position basse, ce qui provoque l'ouverture des doigts grâce à la rotation de la came 14 entraînée elle-même par la rotation de l'axe 15 provoquée par la rotation dans le même sens des deux poulies 18 et 19 entraînées par l'intermédiaire de la chaîne 20 et la poulie motrice 25 mise en rotation par le déplacement du porte satellite 47 lors de la retombée du dispositif 50 accompagnant le rotor 52.

On voit qu'on obtient ainsi de façon extrêmement simple et extrêmement sûre la retombée de la barre de commande dans sa position d'insertion maximum, les griffes 6 et 7 ayant libéré la tige de commande 2 à laquelle est fixée la barre de commande.

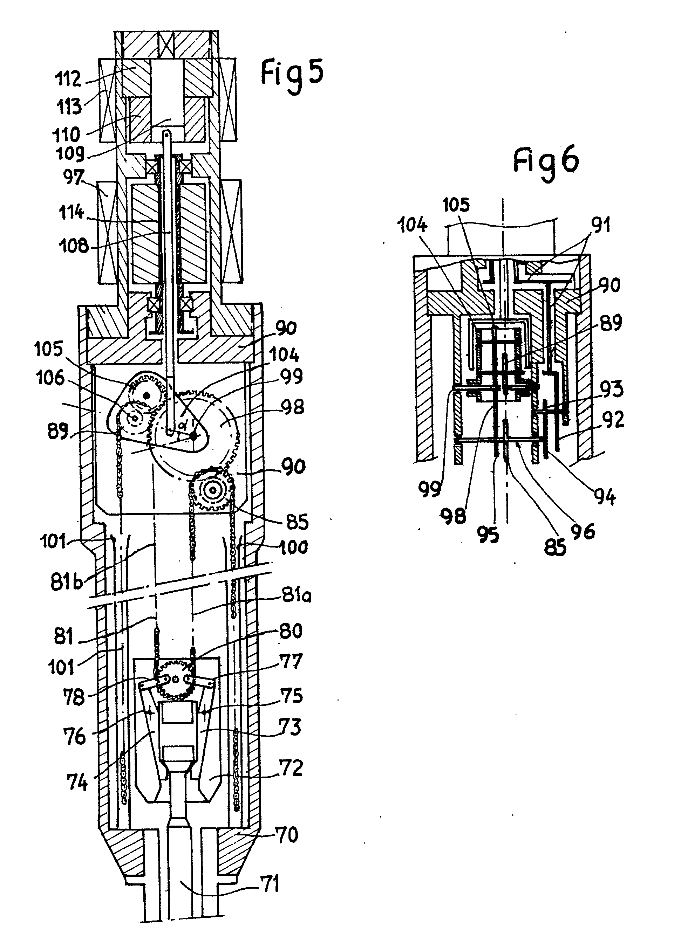

Sur les figures 5 et 6, on voit un autre mode de réalisation du mécanisme à chaînes suivant l'invention.

A l'intérieur de l'enceinte étanche 70 raccordée à la cuve du réacteur nucléaire, sont disposés, comme précédemment, l'ensemble des organes nécessaires pour le déplacement et la retombée de la barre de commande. La pièce de liaison 71 liée à la barre de commande est, comme précédemment, prise en charge par un grappin 72 comportant des doigts pivotants tels que 73 et 74 montés articulés en 75 et 76 sur le corps du grappin 72. Ces doigts sont reliés de façon articulée à leurs parties supérieures à des biellettes 77 et 78, elles-mêmes articulées à leurs autres extrémités sur une poulie porteuse 80.

La poulie 80 est une poulie à chaînes montée rotative autour de son axe dirigé horizontalement sur le corps de grappin 72.

Une chaîne 81 supporte la poulie 80 et constitue les deux brins de levage verticaux 81a et 81b passant respectivement sur les poulies motrices 85 et 89 à la partie supérieure de leur course.

La chaîne 81 est une chaîne à rouleaux dont les brins mous correspondant respectivement aux brins porteurs 81a et 81b retombent dans des guides 100 et 101.

On voit que, lors de mouvements synchrones des brins de levage 81a et 81b, dans un sens ou dans l'autre, la poulie porteuse 80 et le grappin 72 sont entraînés dans un mouvement de translation (levage ou descente), et que, lors de mouvements différentiels de ces brins de levage, la poulie porteuse tourne, ce qui produit l'ouverture ou la fermeture des doigts pivotants.

Sur les figures 5 et 6 sont représentés les deux mécanismes différentiels permettant d'obtenir les mouvements synchrones ou les mouvements différentiels des brins de la chaîne 81.

L'ensemble du mécanisme est logé dans un support fixe 90 solidaire de l'enceinte étanche 70.

Ce mécanisme comporte une chaîne cinématique 91 entraînée par un moteur pas à pas 97, en prise avec le pignon d'attaque 92 du différentiel.

Le pignon 92 est claveté sur un arbre monté dans le support 90 sur lequel est également claveté un pignon 93 engrénant avec un pignon 94 claveté sur un arbre 96. Sur l'arbre 96 monté rotatif dans le support 90 sont également fixés la poulie à chaîne 85 et un pignon 95 engrénant avec une roue dentée 98 fixée sur un axe 99 monté rotatif dans le support fixe 90.

Sur l'axe 99, est également monté rotatif un support mobile 104 constitué par deux flasques parallèles entre lesquels sont montés sur des axes horizontaux, unpignon 105 engrénant avec la roue dentée 98, un pignon 106 engrénant avec le pignon 105 et la poulie à chaines 89 clavetée sur le même axe que le pignon 106.

Le support mobile peut être maintenu en position ou au contraire déplacé par pivotement d'un angle $\alpha$, grâce à une tige de commande 108 faisant partie d'un organe de maintien et de déplacement 109 qui sera décrit ci-dessous. Lorsque le support mobile est maintenu en position grâce à la tige de commande 108, la mise en rotation de la chaine cinématique 91 transmise au différentiel par le pignon d'attaque 92, provoque la rotation des poulies à chaines 85 et 89 dans des sens différents et à la même vitesse, les pignons intermédiaires étant prévus dans ce but.

Les brins de levage 81a et 81b de la chaine 81 sont alors entrainés dans un mouvement à même vitesse vers le haut ou vers le bas, suivant le sens de rotation du moteur 97, avec arrêt possible en position quelconque, à l'issue d'un pas du moteur 97. Le grappin entraine donc la barre liée à la tige de commande si les doigts sont refermés sur la partie supérieure échancrée de la pièce de liaison 71.

L'organe de maintien et de déplacement 109 comporte, outre la tige de commande 108 articulée à sa partie basse sur le support mobile 104, une pièce magnétique 110 sur laquelle s'articule la partie supérieure de la tige 108 et un électro-aimant comportant une pièce magnétique 112 et une bobine 113 extérieure à l'enceinte étanche 70.

Lorsque la bobine 113 est alimentée les pièces magnétiques 112 et 110 sont maintenues en contact et le support mobile 104 est luimême maintenu en position haute.

Le mouvement de la barre de commande pour la conduite du réacteur peut s'effectuer puisque les doigts 73 et 74 sont maintenus en position de fermeture comme représenté à la figure 5.

Si l'on coupe l'alimentation de la bobine 113, la pièce magnétique 110 retombe en entrainant la tige 108. Le support mobile tourne de l'angle $\alpha$ autour de l'axe 99.

Cette rotation entraine une rotation des pignons 105 et 106 et de la poulie à chaines 89, la poulie à chaines 85 restant immobile car liée à la chaine cinématique 91 maintenue bloquée en position.

Cette rotation différentielle de la poulie 89 par rapport à la poulie 85 entraine une rotation de la poulie porteuse 80, provoquant l'ouverture des doigts 73 et 74 et la retombée de la barre en position d'insertion maximum dans le réacteur. Le corps du grappin redescend d'une hauteur faible correspondant à la position légèrement plus basse de l'axe de la poulie motrice 89.

La chaine cinématique 91 comprend un moteur pas à pas 97 dont le stator est extérieur à l'enceinte 70 et dont le rotor est à l'intérieur de cette enceinte et solidaire d'une chemise 114 ayant pour axe l'axe vertical du dispositif.

On voit donc que les avantages principaux du dispositif selon l'invention sont une très grande simplicité de conception et une très grande fiabilité dans le fonctionnement.

En effet les mouvements de la barre de commande sont parfaitement contrôlés par la commande du moteur pas à pas et le maintien en position de la barre de commande dans une position verticale quelconque est également assuré grâce au maintien en position angulaire de ce moteur pas à pas.

La commande de retombée des barres en cas d'arrêt d'urgence est également obtenue de façon extrêmement simple et extrêmement sûre, puisqu'il suffit de couper l'alimentation du stator du moteur pas à pas dans un cas ou de l'électro-aimant dans l'autre cas.

En effet la transmission des mouvements par les dispositifs mécaniques simples que sont les chaines des poulies à chaines et les pignons est effectuée d'une façon précise et sûre.

D'autre part l'ensemble du dispositif ne comporte qu'un nombre de pièces très réduit par rapport aux dispositifs connus antérieurement et d'autre part le différentiel utilisé à la fois pour la commande du mouvement des chaines et l'ouverture et la fermeture des griffes du grappin peut être réalisé sous une forme très compacte si bien que ce dispositif effectuant deux fonctions différentes n'occupe qu'une place réduite dans l'enceinte sous pression 1.

D'autre part les chaines qui sont des éléments de construction simples et robustes peuvent être réalisées avec des matériaux ayant un bon comportement dans l'eau sous pression.

D'autre part la disposition des chaines en carré dans le cas du premier mode de réalisation qui est permise grâce à l'utilisation du différentiel qui permet d'obtenir des sens de rotation inverses des poulies donne une construction extrémement facile à loger dans la structure cylindrique de l'enceinte.

Par rapport aux dispositifs à cliquets de l'art antérieur, le dispositif à chaines a d'autre part l'avantage d'éviter des chocs, des vibrations et des bruits puisque le déplacement est pratiquement continu.

Mais il est bien évident que l'invention ne se limite pas au dispositif qui vient d'être décrit à titre d'exemple mais qu'elle en comporte au contraire toutes les variantes.

C'est ainsi que l'organe de maintien et de déplacement du portesatellite dans le cas du premier mode de réalisation peut être relié à la culasse d'un électro-aimant maintenant le dispositif en position fixe lorsqu'il est alimenté, le laissant retomber lorsqu'on interrompt l'alimentation. En effet il n'est pas nécessaire que cet organe de déplacement et de maintien soit relié au rotor du moteur d'entrainement du différentiel.

De même dans le cas du second mode de réalisation, on peut imaginer de relier l'organe de déplacement et de maintien du support mobile au rotor du moteur pas à pas.

On peut également imaginer d'autres dispositifs permettant d'obtenir les mouvements du porte-satellite, à partir du moment où ces dispositifs permettent d'effectuer le déplacement du porte-satellite de façon extrêmement sûre en cas d'arrêt d'urgence du réacteur.

D'autre part, on a décrit un dispositif où la mise en rotation du différentiel est obtenue à partir d'un moteur pas à pas à réluctance variable, mais il est également possible de mettre en rotation le différentiel pour les déplacements de la barre de commande grâce à d'autres dispositifs moteurs, notamment au moyen de la conjugaison d'un moteur asynchrone et d'une traversée magnétique tournante, à partir du moment où ces dispositifs permettent de réaliser des mouvements d'une amplitude exactement contrôlée et un maintien en position du dispositif entrainé par calage du dispositif moteur.

La ou les poulies porteuses peuvent être constituées par des portions de poulies à chaines ou par des poulies identiques aux poulies motrices utilisées en partie supérieure du dispositif, le paramètre déterminant étant l'amplitude de rotation de la came nécessaire pour l'ouverture et la fermeture des doigts.

On peut utiliser un nombre quelconque de poulies motrices ou de poulies porteuses et un nombre quelconque de chaines, à partir du moment où l'on réalise au moins deux brins de levage verticaux de part et d'autre de l'axe des poulies porteuses.

On peut utiliser des chaines à rouleaux dont les brins mous sont stockés dans des guides verticaux de grande hauteur ou au contraire des chaines à maillons soudés qui se stockent dans des puits de plus faible hauteur puisque ces chaines réalisent naturellement un enroulement compact lorsqu'elles sont déposées dans les puits.

Enfin le dispositif suivant l'invention est applicable non seulement dans le cas de la commande des réacteurs nucléaires à eau pressurisée mais également dans le cas de tout autre type de réacteur utilisant des éléments absorbants à déplacement vertical pour le pilotage du réacteur et la chute des éléments absorbants dans le coeur en position d'insertion maximum pour l'arrêt d'urgence.

**Revendications**

1. Mécanisme à chaines à mouvements différentiels pour la commande d'un réacteur nucléaire, par déplacement vertical d'un ensemble absorbant les neutrons dans le coeur du réacteur et retombée de cet ensemble sous l'effet de son poids en position d'insertion maximum, l'élément absorbant comportant à sa partie supérieure une pièce de liaison (2), permettant de relier l'ensemble absorbant au mécanisme, pour son déplacement contrôlé, lorsque les doigts pivotants (6, 7) d'un grappin (4) relié aux chaines (20, 21) sont en position de fermeture sur la tige de commande (2) ou sa retombée, lorsque les doigts sont mis en position d'ouverture, le déplacement vertical du grappin et de l'élément absorbant étant obtenu grâce au mouvement synchrone de brins de levage (20a et 21a) fixés au grappin et les mouvements d'ouverture et de fermeture des doigts du grappin par mouvements différentiels des brins de levage, le mécanisme comportant à l'intérieur d'une enceinte étanche (1) en communication avec l'intérieur du réacteur nucléaire:

— au moins une poulie à chaines (18, 19) appelée poulie porteuse, fixée sur un axe horizontal (15) monté rotatif sur le corps du grappin (4)
— au moins une chaine (20, 21) supportant la poulie porteuse (18—19),
— et un dispositif différentiel à pignons, caractérisé par le fait:
— que l'axe de la poulie porteuse (18, 19) est relié à un dispositif (14) d'actionnement des doigts pivotants (6, 7) la rotation de cet axe (15) dans un sens ou dans l'autre provoquant l'ouverture ou la fermeture des doigts (6, 7), par l'intermédiaire du dispositif d'actionnement (14),
— que chacune des chaines (20, 21)a un parcours vertical d'un côté au moins de la poulie porteuse (18, 19), avec renvoi sur une poulie à chaines motrice (25, 26) d'axe parallèle à l'axe (15) de la poulie porteuse à la partie supérieure de sa course, la ou les chaines (20, 21) constituant au moins deux brins de levage (20a et 21a) disposés de part et d'autre de la poulie porteuse (18, 19), passant chacun sur une poulie motrice (25, 26),
— et que le dispositif différentiel comprend un pignon d'attaque (40) entrainé par un dispositif moteur (51—52), un ensemble de pignons (31, 32) montés rotatifs dans un support fixe solidaire de l'enceinte étanche (1) de façon à transmettre la rotation du pignon d'attaque (40) et un support mobile (47) monté pivotant par rapport à l'enceinte étanche (1), dans lequel est monté rotatif au moins un pignon (46) engrénant avec l'un au moins des pignons (31, 32) de la partie fixe du différentiel, le support mobile (47) étant relié à un organe de déplacement (50) pour son maintien en position ou pour son déplacement dans un sens ou dans l'autre, cependant que deux pignons (31, 32) au moins du différentiel entrainés en rotation à la même vitesse et dans des sens différents, lorsque le dispositif moteur (51, 52) est mis en fonctionnement, le support mobile (47) étant maintenu en position, sont solidaires chacun d'une poulie motrice (25, 26) pour le déplacement vertical de l'ensemble absorbant, le déplacement du support mobile (47) entrainant une rotation différentielle des deux pignons (31, 32) solidaires des poulies motrices (25, 26) pour provoquer par l'intermédiaire des chaines (20, 21) la rotation de l'axe (15) et l'ouverture ou la fermeture des doigts pivotants (6, 7).

2. Mécanisme à chaines à mouvements différentiels suivant la revendication 1, caractérisé par le fait qu'il comporte:

— deux poulies porteuses (18, 19) identiques fixées sur l'axe horizontal (15) monté sur le grappin (4),
— deux poulies motrices (25, 26) identiques,
— deux chaines (20, 21) dont l'une est fixée par l'une de ses extrémités à l'une des poulies porteuses (18, 19) et passe sur l'une des poulies motrices (25, 26) et dont l'autre est fixée à l'autre poulie porteuse en opposition à la première chaine, par rapport à l'axe horizontal du grappin (4) et passe sur l'autre poulie motrice,
— et un différentiel à pignons coniques comportant deux planétaires (31, 32) et au moins un satellite (46) fixé dans un porte-satellite (47) constituant le support mobile du différentiel, provoquant la rotation des planetaires (31, 32) en synchronisme et en sens inverse, lorsque le porte-satellite (47) est maintenu en position, l'un des planétaires (32) étant solidaire du pignon d'attaque (40) et de l'une des poulies motrices (26) et l'autre planétaire (31) étant solidaire de l'autre poulie motrice (25).

3. Mécanisme à chaines suivant la revendication 1, caractérisé par le fait qu'une des poulies motrices (85) est solidaire en rotation du pignon d'attaque (94) du différentiel et que l'autre poulie motrice (89) est solidaire en rotation d'un pignon (106) porté par le support mobile (104) dont le déplacement provoque une rotation différentielle des pignons (105, 106) du support mobile (104) par rapport aux pignons (95, 98) portés par le support fixe (90).

4. Mécanisme à chaines suivant l'une quelconque des revendications 1, 2 et 3, caractérisé par le fait qu'une came d'actionnement des doigts pivotants (14) est fixée sur l'axe horizontal (15) monté sur le grappin (4).

5. Mécanisme à chaines suivant l'une quelconque des revendications 1, 2 et 3, caractérisé par le fait que le dispositif d'actionnement des doigts pivotants (73, 74) est constitué par un ensemble de biellettes (77, 78) reliées de façon articulée, d'une part à l'axe horizontal monté sur le grappin et d'autre part aux doigts pivotants.

6. Mécanisme à chaines suivant l'une quelconque des revendications 1 à 5, caratérisé par le fait que les chaines sont des chaines à rouleaux.

7. Mécanisme à chaines suivant l'une quelconque des revendications 1 à 5, caractérisé par le fait que les chaines sont des chaines à maillons soudés.

8. Mécanisme à chaines suivant l'une quelconque des revendications 1 à 7, caractérisé par le fait que le dispositif moteur (51—52) d'entrainement du pignon d'attaque (40) du différentiel est un moteur pas à pas (45,97) dont le stator (51) est disposé à l'extérieur de l'enceinte étanche (1) et dont le rotor (52) est disposé à l'intérieur de l'enceinte et mobile verticalement dans un sens sous l'effet de son poids et dans l'autre sous l'effet des forces magnétiques exercées par le stator lorsque celui-ci est alimenté, l'organe de maintien et de déplacement en rotation du support mobile (47) étant constitué par une tige (50a) reliée à l'une de ses extrémités au rotor (52) et à l'autre extrémité au support mobile (47) par l'intermédiaire d'une bielle articulée (50b) les mouvements de déplacement verticaux du rotor (52) provoquant des mouvements de rotation du support mobile (47) pour l'ouverture ou la fermeture des doigts du grappin et le maintien du rotor en position haute par force magnétique maintenant le support mobile en position fixe et les doigts du grappin en position de fermeture.

9. Mécanisme à chaines suivant l'une quelconque des revendications 1 à 7, caractérisé par le fait que le dispositif moteur d'entrainement du pignon d'attaque (94) du différentiel est un moteur pas à pas (97) dont le stator (92) est disposé à l'extérieur de l'enceinte étanche (70) et dont le rotor est disposé à l'intérieur de cette enceinte, cependant que l'organe de maintien et de déplacement (109) du support mobile (104) est constitué par une pièce magnétique (110) reliée à une tige (108) à l'une de ses extrémités, l'autre extrémité de cette tige étant reliée au support mobile (104) et un électro-aimant comprenant une pièce magnétique (112) à l'intérieur de l'enceinte étanche en vis à vis de la pièce magnétique (110) reliée à la tige (108) et une bobine (113) entourant l'enceinte étanche et soumettant la pièce magnétique à un champ magnétique pour le maintien du support mobile en position de fermeture des doigts.

10. Mécanisme à chaines suivant l'une quelconque des revendications 1 à 7, caractérisé par le fait que le moteur d'entrainement du pignon d'attaque du différentiel est un moteur asynchrone disposé à l'extérieur de l'enceinte étanche transmettant son mouvement au pignon d'attaque, par l'intermédiaire d'une traversée magnétique étanche.

**Patentansprüche**

1. Differential-Kettentriebwerk zur Steuerung eines Kernreaktors durch senkrechtes Verfahren von Neutronen Absorbermaterial in dem Reaktorkern und Fallen des Materials unter seinem Eigengewicht in die maximale Einfahrstellung, wobei das Absorberelement an seinem Oberteil ein Verbindungsstück (2) aufweist, um das Absorbermaterial zu dessen Zwangsbewegung mit dem Triebwerk zu verbinden, wenn die schwenkbaren Arme (6, 7) eines mit den Ketten (20, 21) verbundenen Greifers (4) an der Steuerstange (2) in der Schließstellung sind, oder zu dessen Fallen, wenn die Arme in die Öffnungsstellung gebracht werden, wobei die senkrechte Verschiebung des Greifers und des Absorbermaterials durch die Synchronbewegung der an dem Greifer befestigten Kettentrume (20a und 21a) und die Öffnungs- und Schließbewegungen der Greiferarme durch Differentialbewegungen der Kettentrume erzielt werden, wobei das innen in einer mit dem Kernreaktorinnenraum in Verbindung stehenden dichten Ummantelung (1) untergrebrachten Triebwerk:

— mindestens eine als Tragrolle bezeichnete, auf einer Horizontalachse (15), die drehbar auf dem Körper des Greifers (4) montiert ist, befestigte Kettenrolle (18, 19),
— mindestens eine die Tragrolle (18, 19) tragende Kette (20, 21),
— und eine Differentialzahnradanordnung aufweist, dadurch gekennzeichnet,
— daß die Achse der Tragrolle (18, 19) mit einer Vorrichtung (14) zur Betätigung der schwenkbaren Arme (6, 7) verbunden ist, wobei die Drehung dieser Achse (15) in die eine oder die andere Richtung das Öffnen oder Schließen der Arme (6, 7) über die Betätigungsvorrichtung (14) bewirkt,
— daß jede Kette (20, 21) mindestens auf einer Seite der Tragrolle (18, 19) einen senkrechten Weg durchläuft bei Umlenkung an deren oberen Wegende über eine Antriebeskettenrolle (25, 26), deren Achse parallel zur Achse (15) der Tragrolle ist, wobei die Kette oder Ketten (20, 21) mindestens zwei über jeweils eine Antriebsrolle (25, 26) laufende, an beiden Seiten der Tragrolle (18, 19) angeordnete Kettentrume (20a und 21a) bilden,
— und daß die Differentialzahnradanordnung ein über eine Motoreinrichtung (51, 52) angetriebenes Antriebsritzel (40) umfaßt, sowie zur Übertragung der Drehbewegung des Antriebsritzels (40) ein Satz Zahnräder (31, 32), welche auf einer feststehenden, mit der dichtfesten Ummantelung (1) fest verbundenen Auflage drehbar montiert sind, und eine zur dichtfesten Ummantelung (1) schwenkbar montierte bewegliche Auflage (47), auf welcher mindestens ein Zahnrad (46) drehbar montiert ist, das mit mindestens einem Zahnrad (31, 32) der feststehenden Auflage der Differentialzahnradanordnung in Eingriff steht, wobei die bewegliche Auflage (47) zu deren Festhaltung oder deren Bewegung in die eine oder die andere Richtung mit einem Verschiebeglied (50) verbunden ist, während zum senkrechten Verfahren des Absorbermaterials mindestens zwei mit gleicher Geschwindigkeit und in unterschiedliche Richtungen drehbeweglich angetriebene Differential-Zahnräder (31, 32) jeweils mit einer Antriebsrolle (25, 26) fest verbunden sind, wenn die Motoreinrichtung (51, 52) eingeschaltet wird, wobei die beweglich Auflage (47) in der Stellung festgehalten wird, und wobei die Bewegung der schwenkbaren Auflage (47) eine Differentialrotierung der mit den Antriebsrollen (25, 26) fest verbundenen beiden Zahnrädern (31, 32) zur Folge hat, wodurch die Rotation der Achse (15) und das Öffnen oder Schließen der Schwenkarme (6, 7) über die Ketten (20, 21) bewirkt wird.

2. Differential-Kettentriebwerk nach Anspruch 1, dadurch gekennzeichnet, daß es umfaßt:

— zwei identische Tragrollen (18, 19), die auf der Horizontalachse (15) befestigt sind, welche auf dem Greifer montiert ist,
— zwei identische Antriebsrollen (25, 26),
— zwei Ketten (20, 21), wobei eine mit einem Ende an jeweils einer Tragrolle (18, 19) befestigt ist und über jeweils eine Antriebsrolle (25, 26) läuft, und die andere gegenüberliegend zur ersten Kette, bezogen auf die Horizontalachse des Greifers (4), an der anderen Tragrolle befestigt ist und über die andere Antriebsrolle läuft,
— und ein Kegelräderdifferential mit zwei Sonnenrädern (31, 32) und mindestens einem Planetenrad (46), das an einem die bewegliche Differentialauflage bildenden Planetenradträger (47) befestigt ist, und die gleichlaufende Drehung in entgegengesetzter Richtung der Sonnenräder (31, 32) bewirkt, wenn der Planetenradträger (47) in Ruhestellung gehalten wird, wobei ein Sonnenrad (32) mit dem Antriebsritzel (40) und jeweils einer Antriebsrolle (26) und das andere Sonnenrad (31) mit der anderen Antriebsrolle (25) fest verbunden sind.

3. Kettentriebwerk nach Anspruch 1, dadurch gekennzeichnet, daß jeweils eine Antriebsrolle (85) mit dem Differential-Antriebsritzel (94) drehfest verbunden ist, und daß die andere Antriebsrolle (89) mit einem von der beweglichen Auflage (104) getragenen Ritzel (106) drehfest verbunden ist, wobei deren Bewegung eine Differentialrotierung der Zahnräder (105, 106) der beweglichen Auflage (104) in bezug auf die von der feststehenden Auflage (90) getragenen Zahnräder (95, 98) bewirkt.

4. Kettentriebwerk nach einem der Ansprüche 1, 2 und 3, dadurch gekennzeichnet, daß eine Nocke zur Betätigung der Schwenkarme (14) auf der an dem Greifer (4) montierten Horizontalachse (15) befestigt ist.

5. Kettentriebwerk nach einem der Ansprüche 1, 2 und 3, dadurch gekennzeichnet, daß die Vorrichtung zur Betätigung der Schwenkarme (73, 74) aus einem Satz Schwingarme (77, 78) besteht, die einerseits mit der auf dem Greifer montierten Horizontalachse und anderseits mit den Schwenkarmen gelenkig verbunden sind.

6. Kettentriebwerk nach einem der Ansprüche 1 bis 5, dadurch gekennzeichnet, daß die Ketten Rollenketten sind.

7. Kettentriebwerk nach einem der Ansprüche 1 bis 5, dadurch gekennzeichnet, daß die Ketten geschweißte Gliederketten sind.

8. Kettentriebwerk nach einem der Ansprüche 1 bis 7, dadurch gekennzeichnet, daß die Motoreinrichtung (51, 52) zum Antrieb des Differential-Antriebsritzels (40) aus einem Schrittschaltmotor (45, 97) besteht, bei welchem der Stator (51) ausserhalb der dichten Ummantelung (1) angeordnet ist und der Läufer (52) innerhalb der Ummantelung untergebracht und unter seinem Eigengewicht in eine Richtung und unter der Wirkung der durch den Stator ausgeübten Magnet-Kräfte in die andere Richtung senkrecht verschiebbar ist, wenn dieser mit Strom versorgt wird, wobei das Glied zum Halten und Schwenken der beweglichen Auflage (47) aus einer Stange (50a) besteht, welche jeweils an einem Ende mit dem Läufer (52) und am anderen Ende mit der beweglichen Auflage (47) über einen angelenkten Schwingarm (50b) verbunden ist, wobei die senkrechten Verschiebebewegungen des Läufers (52) die Schwenkbewegungen der beweglichen Auflage (47) zum Öffnen und Schliessen der Greiferarme bewirken und das Halten des Läufers in der oberen Lage durch Magnetkräfte die bewegliche Auflage in der Ruhestellung und die Greiferarme in der Schließstellung festhalten.

9. Kettentriebwerk nach einem der Ansprüche 1 bis 7, dadurch gekennzeichnet, daß die Motoreinrichtung zum Antrieb des Differential-Antriebsritzels (94) ein Schrittschaltmotor (97) ist, bei welchem der Stator (92) außerhalb der dichten Ummantelung (70) angeordnet ist und der Läufer innerhalb dieser Ummantelung untergebracht ist, während das Glied (109), zum Halten und Schwenken der beweglichen Auflage (104) aus einem Magnetstück (110) besteht, das mit einer Stange (108) an jeweils einem Ende verbunden ist, wobei das andere Ende dieser Stange mit der beweglichen Auflage (104) verbunden ist, und aus einem Elektromagnet bestehend aus einem Magnetstück (112) innen in der dichten Ummantelung gegenüber dem mit der Stange (108) verbundenen Magnetstück (110), und aus einer die dichte Ummantelung umgebenden Wicklung (113), die zum Halten der beweglichen Auflage in der Schließstellung der Finger das Magnetstück einem Magnetfeld unterzieht.

10. Kettentriebwerk nach einem der Ansprüche 1 bis 7, dadurch gekennzeichnet, daß der Antriebsmotor von dem Differential-Antriebstritzel ein außerhalb der dichten Ummantelung angeordneten Asynchronmotor ist, der die Bewegung auf das Antriebsritzel über eine magnetisch abgedichtete Durchführung überträgt.

**Claims**

1. Differential-movement chain mechanism for controlling a nuclear reactor as a result of the vertical displacement of an assembly absorbing the neutrons in the core of the reactor and the falling back of this assembly under the effect of its weight into the position of maximum insertion, the absorbent element incorporating in its upper part a connecting component (2), making it possible to connect the absorbent assembly to the mechanism for its controlled displacement, when the pivoting fingers (6, 7) of a grab (4) connected to the chains (20, 21) are in the closing position on the control rod (2), or for its falling back when the fingers are put in the opening position, the vertical displacement of the grab and of the absorbent element being obtained by means of the synchronous movement of lifting cables (20a and 21a) fastened to the grab and the movements of opening and closing of the fingers of the grab as a result of differential movements of the lifting cables, the mechanism incorporating, within a leak-proof enclosure (1) communicating with the interior of the nuclear reactor, at least one chain pulley (18, 19), called a carrying pulley, which is fastened on a horizontal axle (15) mounted rotatably on the body of the grab (4), at least one chain (20, 21) supporting the carrying pulley (18—19), and a differential pinion device, characterised in that the axle of the carrying pulley (18, 19) is connected to a device (14) for actuating the pivoting fingers (6, 7), the rotation of this axle (15) in one direction or the other causing the opening or closing of the fingers (6, 7) by means of the actuating device (14), in that each of the chains (20, 21) has a vertical travel on at least one side of the carrying pulley (18, 19), with reversal over a drive chain pulley (25, 26) having an axle parallel to the axle (15) of the carrying pulley in the upper part of its stroke, the chain or chains (20, 21) constituting at least two lifting cables (20a and 21a) located on either side of the carrying pulley (18, 19) and each passing over a drive puelly (25, 26), and in that the differential device comprises a drive pinion (40) driven by a motor device (51—52), an assembly of pinions (31, 32) mounted rotatably in a stationary support fixed to the leak-proof enclosure (1) so as to transmit the rotation of the drive pinion (40), and a movable support (47) which is mounted pivotally in relation to the leakproof enclosure (1) and in which is mounted rotatably at least one pinion (46) engaging with at least one of the pinions (31, 32) of the stationary part of the differential device, the movable support (47) being connected to a displacement means (50) to maintain it in position or to displace it in one direction or the other, whilst at least two pinions (31, 32) of the differential device, which are driven to rotate at the same speed and in different directions when the motor device (51, 52) is started up, the movable support (47) being maintained in position, are each fixed to a drive pulley (25, 26) for the vertical displacement of the absorbent assembly, the displacement of the movable support (47) causing differential rotation of the two pinions (31, 32) fixed to the drive pulleys (25, 26) so as to cause by means of the chains (20, 21) the rotation of the axle (15) and the opening or closing of the pivoting fingers (6, 7).

2. Differential-movement chain mechanism according to Claim 1, characterised in that it incorporates two identical carrying pulleys (18, 19) fastened on the horizontal axle (15) mounted on the grab (4), two identical drive pulleys (25, 26), two chains (20, 21), one of which is fastened by one of its ends to one of the carrying pulleys (18, 19) and passes over one of the drive pulleys (25, 26) and the other of which is fastened to the other carrying pulley in opposition to the first chain in relation to the horizontal axle of the grab (4) and passes over the other drive pulley, and a differential device with bevel pinions, comprising two planetary gears (31, 32) and at least one satellite (46) fastened in a satellite-holder (47) constituting the movable support of the differential device, causing the planetary gears (31, 32) to rotate in synchronism and in opposite directions when the satellite-holder (47) is maintained in position, one of the planetary gears (32) being fixed to the drive pinion (40) and to one of the drive pulleys (26) and the other planetary gear (31) being fixed to the other drive pulley (25).

3. Chain mechanism according to Claim 1, characterised in that one of the drive pulleys (85) is fixed in rotation to the drive pinion (94) of the differential device, and in that the other drive pulley (89) is fixed in rotation to a pinion (106) carried by the movable support (104), the displacement of which causes differential rotation of the pinions (105, 106) of the movable support (104) in relation to the pinions (95, 98) carried by the stationary support (90).

4. Chain mechanism according to any one of Claims 1, 2 and 3, characterised in that a cam for actuating the pivoting fingers (14) is fastened to the horizontal axle (15) mounted on the grab (4).

5. Chain mechanism according to any one of Claims 1, 2 and 3, characterised in that the device for actuating the pivoting fingers (73, 74) consists of an assembly of rods (77, 78) articulated, on the one hand, to the horizontal axle mounted on the grab and, on the other hand, to the pivoting fingers.

6. Chain mechanism according to any one of Claims 1 to 5, characterised in that the chains are roller chains.

7. Chain mechanism according to any one of Claims 1 to 5, characterised in that the chains are chains with welded links.

8. Chain mechanism according to any one of Claims 1 to 7, characterised in that the motor device (51—52) for driving the drive pinion (40) of the differential device is a stepping motor (45, 97), the stator (51) of which is located outside the leak-proof enclosure (1) and the rotor (52) of which is located inside the enclosure and is movable vertically in one direction under the effect of its weight and in the other direction under the effect of the magnetic forces exerted by the stator when the latter is fed, the means for maintaining the movable support (47) and for displacing it in rotation consisting of a rod (50a) connected at one of its ends to the rotor (52) and at the other end to the movable support (47) by means of an articulated connecting rod (50b), the vertical displacement movements of the rotor (52) causing rotational movements of the movable support (47) for opening or closing the fingers of the grab, and the retention of the rotor in the upper position by magnetic force maintaining the movable support in the fixed position and the fingers of the grab in the closing position.

9. Chain mechanism according to any one of Claims 1 to 7, characterised in that the motor device for driving the drive pinion (94) of the differential device is a stepping motor (97), the stator (92) of which is located outside the leak-proof enclosure (70) and the rotor of which is located inside this enclosure, whilst the means (109) for maintaining and displacing the movable support (104) consists of a magnetic component (110) connected to a rod (108) at one of its ends, the other end of this rod being connected to the movable support (104), and an electromagnet comprising a magnetic component (112) inside the leak-proof enclosure and opposite the magnetic component (110) connected to the rod (108), and a coil (113) surrounding the leak-proof enclosure and subjecting the magnetic component to a magnetic field so as to maintain the movable support in the closing position of the fingers.

10. Chain mechanism according to any one of Claims 1 to 7, characterised in that the motor for driving the drive pinion of the differential device is an asynchronous motor located outside the leak-proof enclosure and transmitting its movement to the drive pinion by means of a leak-proof magnetic passage.

Fig1

Fig 2

Fig 3

Fig 4

2

0 028 571

Fig 5

Fig 6

3